# FASCICULE DE BREVET EUROPEEN

(11) **EP 2 514 080 B1**
(45) Date de publication et mention de la délivrance du brevet: **12.08.2015**
(21) Numéro de dépôt: 10805800.9
(22) Date de dépôt: 14.12.2010
(51) Int. Cl.: H02K 11/02

(54) **PORTE-BALAIS RÉGULATEUR D'ALTERNATEUR DE VÉHICULE AUTOMOBILE, PROCÉDÉ DE FABRICATION ET ALTERNATEUR CORRESPONDANT**
REGLER/BÜRSTENHALTERANORDNUNG FÜR EINE LICHTMASCHINE EINES KRAFTFAHRZEUGES, HERSTELLUNGSVERFAHREN UND ENTSPRECHENDE LICHTMASCHINE
REGULATOR/BRUSH-HOLDER ASSEMBLY FOR A MOTOR-VEHICLE ALTERNATOR, MANUFACTURING PROCESS AND CORRESPONDING ALTERNATOR

(30) Priorité: 18.12.2009 FR 0959212
(43) Date de publication de la demande: 24.10.2012
(73) Titulaire: Valeo Equipements Electriques Moteur, 94046 Créteil Cedex (FR)
(72) Inventeur: TISSERAND, Pierre, 94450 Limeil Brevannes (FR); PORTE, Christophe, 92300 Levallois Perret (FR); MOREAU, Sébastien, 94000 Créteil (FR); DE LAMARRE, Laurent, 75020 Paris (FR); GRAMMONT, Olivier, 59680 Cerfontaine (FR); SANGIOVANNI, Fabrice, 62930 Wimereux (FR); LECOLE, Brice, 75012 Paris (FR)
(86) Numéro de dépôt international: PCT/FR2010/052703
(87) Numéro de publication internationale: WO 2011/073562

(56) Documents cités:
- EP-A1- 1 058 369
- DE-A1-102008 001 570
- FR-A1- 2 795 880
- GB-A- 2 091 007
- US-A- 5 550 415

## Description

### DOMAINE TECHNIQUE DE L'INVENTION.

La présente invention concerne un porte-balais régulateur d'alternateur de véhicule automobile et son procédé de fabrication. Elle concerne également un alternateur comprenant ce porte-balais régulateur remarquable.

### ARRIERE PLAN TECHNOLOGIQUE DE L'INVENTION.

Les alternateurs modernes pour véhicules automobiles sont des équipements compacts dans lesquels sont intégrés les dispositifs de commande et de régulation.

C'est le porte-balais associé au collecteur du rotor qui supporte le plus souvent le dispositif de régulation de la tension du courant produit par l'alternateur, ainsi que les divers moyens d'antiparasitage, tels que des selfs et des condensateurs.

Ces composants électroniques, actifs ou passifs, doivent être isolés des conditions de travail sévères sous le capot moteur (température, vibrations, poussières) par un boîtier de protection, qui est relativement complexe à réaliser.

Afin de pallier cet inconvénient, la demande de brevet européen EP0750388 A1 de la société VALEO EQUIPEMENTS ELECTRIQUES MOTEUR propose de réaliser la protection d'un condensateur d'antiparasitage directement par surmoulage autour du composant.

La demande de brevet européen EP1058369 A1 de la même société montre l'agencement d'un composant de commande à semi-conducteur de type « ASIC » dans un porte-balais en mettant en oeuvre une technique de microcâblage (« wire bonding » en anglais), qui présente l'avantage d'isoler le composant de commande des contraintes mécaniques et thermiques subies par le porte-balais.

Dans le cas d'un circuit de commande interfacé avec un bus série de type « LIN » (acronyme de « Local Interconnect Network » en anglais, c'est-à-dire « réseau d'interconnexion local »), la ligne de commande peut être soumise à des perturbations radioélectriques, qui créent des défauts de fonctionnement.

Sur des régulateurs commercialisés de ce type, avec une capacité d'entrée de 220 pF par exemple, on constate des défauts de fonctionnement à partir d'une injection d'une perturbation d'environ 10 mW en DPI (acronyme de « Direct RF Power Injection » en anglais, c'est-à-dire « Injection directe de puissance radiofréquence »).

Or les constructeurs de véhicules automobiles demandent que les alternateurs présentent une forte immunité aux perturbations radiofréquences, tout en conservant une bonne fiabilité de fonctionnement.

Si une seule capacité de filtrage en parallèle est utilisée, la fiabilité est relativement bonne, mais l'immunité est relativement faible.

Si de un à trois composants sont intégrés par une technique de surmoulage, telle que le montre la demande EP0750388 A1, l'immunité peut être améliorée, mais les composants supportent mal les pressions et les températures d'injection, même avec des capots protecteurs, au détriment de la fiabilité

Le document GB-A-2091007 décrit un porte-balai selon l'état de la technique.

Dans les porte-balais de l'état de la technique de dernière génération, les composants sont implantés après surmoulage, mais l'implantation de plus de trois composants est difficilement réalisable.

Il existe donc un besoin pour un porte-balais de nouvelle génération intégrant un dispositif de commande et de régulation présentant une forte immunité aux perturbations radiofréquences, et dont la structure et le procédé de fabrication garantissent une bonne fiabilité de fonctionnement.

Pour des raisons d'économies d'échelle, il est de plus souhaitable que la solution technique s'adapte à différents types de régulateurs et à différentes connectiques.

### DESCRIPTION GENERALE DE L'INVENTION.

La présente invention vise donc un porte-balais régulateur d'alternateur de véhicule automobile du type de ceux comportant :
- un support ;
- un circuit électrique comprenant un élément de régulation connecté par microcâblage à un circuit de traces
tel que celui décrit dans la demande EP1058369 A1.

En réponse aux besoins spécifiés ci-dessus, le porte-balais selon l'invention est remarquable en ce que le circuit électrique comprend en outre un circuit de filtrage séparé de l'élément de régulation et connecté par microcâblage au circuit de traces.

Fort avantageusement, le circuit de filtrage comprend un substrat isolant et des composants montés en surface.

Selon l'invention, ce circuit de filtrage est de un filtre en PI de type passe-bas monté en série par microcâblage entre une première trace d'une entrée de commande du circuit électrique et une seconde trace d'une entrée de communication de l'élément de régulation. Conformément à l'invention, d'autres types de filtre, autres que passe-bas, sont bien entendu utilisables selon les besoins en filtrage de l'application.

Selon une autre caractéristique, le substrat comporte au moins une pastille conductrice de masse, et présente avantageusement une boucle de masse contribuant à la fonction de transfert du filtre.

Selon une autre caractéristique, le circuit de filtrage du porte-balais régulateur d'alternateur de véhicule automobile selon l'invention comprend au moins une varistance.

L'invention concerne aussi un procédé de fabrication du porte-balais décrit ci-dessus permettant d'atteindre les objectifs de fiabilité et d'économies d'échelle spécifiés.

Ce procédé est remarquable en ce qu'il comprend:
- un premier collage de l'élément de régulation d'un type prédéterminé sur le support au moyen d'une première colle et du circuit de filtrage d'un type variable sur le circuit de traces au moyen d'une deuxième colle au cours d'une première étape ;
- une première polymérisation des première et seconde colles au cours d'une deuxième étape ;
- un microcâblage de l'élément de régulation et du circuit de filtrage au cours d'une troisième étape ;
- un recouvrement de l'élément de régulation et du circuit de filtrage par un gel polymérisable au cours d'une quatrième étape ;
- une deuxième polymérisation du gel au cours d'une cinquième étape ;
- un second collage d'un capot sur l'élément de régulation et le circuit de filtrage au moyen d'une troisième colle au cours d'une sixième étape ;
- une troisième polymérisation de la troisième colle au cours d'une septième étape.

La première colle est de préférence conductrice électriquement et thermiquement, et la deuxième colle est avantageusement isolante.

Il va de soi que l'on tire bénéfice de l'intégration d'un porte-balais présentant les caractéristiques ci-dessus dans un nouvel alternateur de véhicule automobile.

Ces quelques spécifications essentielles auront rendu évidents pour l'homme de métier les avantages apportés par ce porte-balais par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre un porte-balais régulateur de véhicule automobile connu de l'état de la technique.
La **Figure 2** est le schéma électrique d'un filtre en PI passe-bas de l'art antérieur du type concerné par l'invention.
La **Figure 3** montre un porte-balais régulateur de véhicule automobile selon l'invention.
La **Figure 4** est une vue partielle du porte-balais régulateur de véhicule automobile selon l'invention de la **Figure 3** montrant le microcâblage du circuit de filtrage.
Les **Figures 5a à 5c** montrent des variantes de réalisation du circuit de filtrage du porte-balais régulateur de véhicule automobile selon l'invention.

### DESCRIPTION DES MODES DE REALISATION PREFERES DE L'INVENTION.

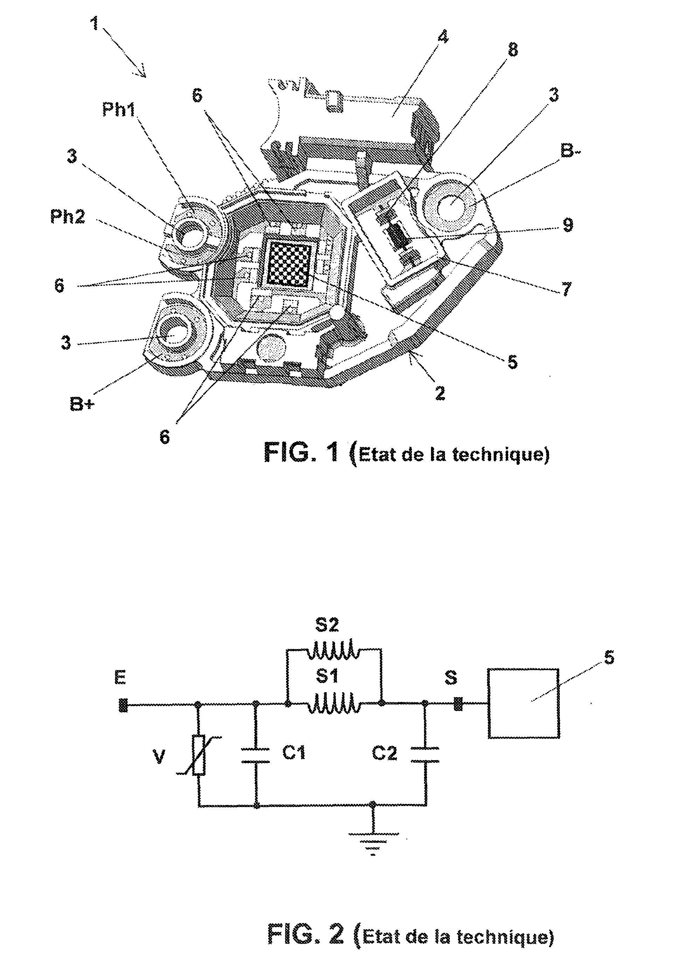

Le type de porte-balais concerné par l'invention est montré sur la Figure 1.

Ce porte-balais 1 connu de l'état de la technique, destiné à un alternateur de véhicule automobile, comporte un support 2 présentant des orifices 3 dans des oreilles pour sa fixation au carter de la machine, sur le palier arrière de celui-ci.

Ces oreilles incorporent des liaisons électriques vers les phases Ph1, Ph2 de l'alternateur, et la batterie B+, B- du véhicule

Le porte-balais 1 comporte une cage à balais 4 renfermant des balais destinés à venir en contact avec le collecteur du rotor.

Le porte-balais 1 comprend un composant de commande et de régulation 5 à semi-conducteur du type « ASIC » ou hybride, fixé par une colle thermiquement conductrice au support 2 dans un logement

Ce composant est relié par microcâblage (non représenté) à un circuit de traces 6.

Le circuit électrique formé par le composant 5 et le circuit de traces 6 communique avec l'unité de contrôle du véhicule au moyen d'un connecteur 7.

Ce connecteur comprend notamment une ligne de communication 8 d'un bus de communication LIN qui peut être soumis à des perturbations radioélectriques.

L'effet de ces perturbations est atténué, selon une solution connue, au moyen d'un condensateur 9 agencé entre la ligne de communication 8 et la masse, comme le montre bien la **Figure 1**.

Dans cette forme de réalisation particulière, l'atténuation peut être améliorée en utilisant un filtre en PI passe-bas, comportant de trois à cinq composants, dont le schéma de principe, est indiqué sur la **Figure 2**. On notera que, conformément à l'invention, d'autres types de filtre pourront être utilisés selon les besoins de filtrage particuliers de l'application, par exemple, des filtres de type Γ ou T, ou L, non exclusivement passe-bas, et y compris des filtres R, L, C ( R pour «composant résistif», L pour «composant inductif» et L pour «composant capacitif»). De manière générale, le filtre utilisé comportera de préférence de un à cinq composants, non exclusivement.

Dans le filtre de la **Figure 2**, l'entrée E du filtre est connectée à l'entrée de commande du circuit électrique 5,6 et la sortie S à l'entrée de communication du composant de régulation 5. Deux condensateurs C1, C2 relient respectivement l'entrée E et la sortie S du filtre à la masse, tandis qu'une self S1 est insérée en série dans l'entrée de communication.

En option, une seconde self S2 montée en parallèle avec la première S1 est prévue.

De préférence, en variante, une varistance V en parallèle sur l'entrée E écrête avantageusement les surtensions présentes sur la ligne de commande 8.

Des essais effectués par l'entité inventive ont montré qu'un filtre en PI tel que montré à la **Figure 2** est efficace pour des injections DPI allant jusqu'à 5W.

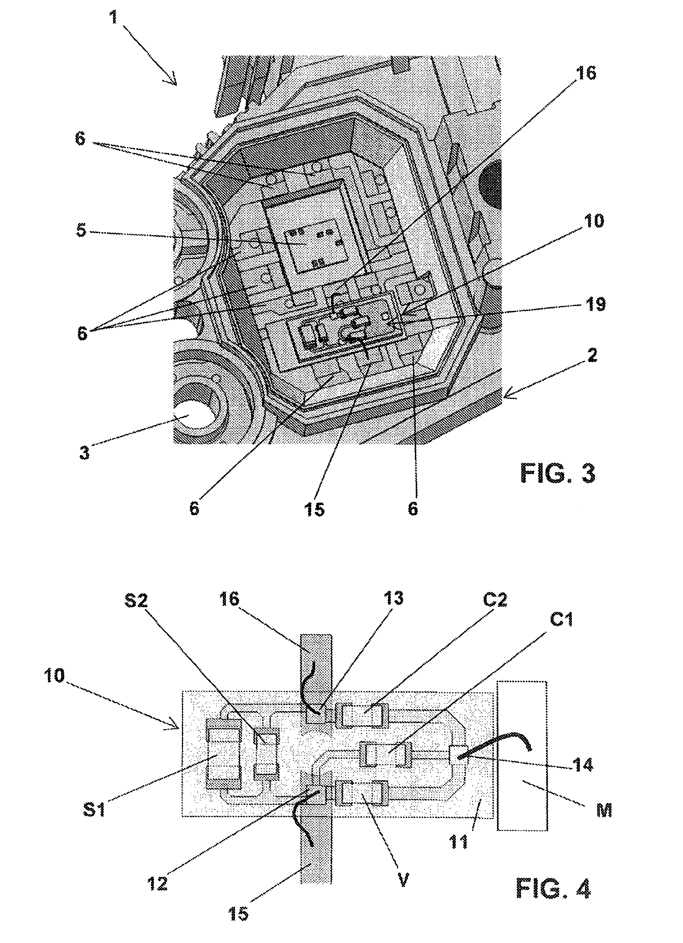

La **Figure 3** montre l'intégration d'un circuit de filtrage 10 implémentant le schéma de principe de la **Figure 2** dans le porte-balais 1 selon l'invention.

Dans un mode de réalisation préféré de l'invention, ce circuit de filtrage 10 se présente sous la forme d'un module constitué d'un substrat isolant 11 supportant des composants montés en surface (CMS). Dans cette forme de réalisation particulière, il est également prévu un plan de masse 19, montré à la **Figure 3**, qui participe à la réalisation des performances recherchées pour ce filtre.

Comme le montre bien la **Figure 4**, pour une forme de réalisation sans plan de masse 19 ici, le substrat 11 comporte des pastilles conductrices 12,13 qui permettent la connexion par microcâblage, d'une part, de l'entrée E du circuit de filtrage 10 à une première trace 15 d'une entrée de commande du circuit électrique 5,6, et, d'autre part, à une seconde trace 16 d'une entrée de communication d'un élément de régulation 5.

Au moins une pastille de masse 14 permet la connexion par microcâblage du module 10 à une masse M du circuit électrique 5,6.

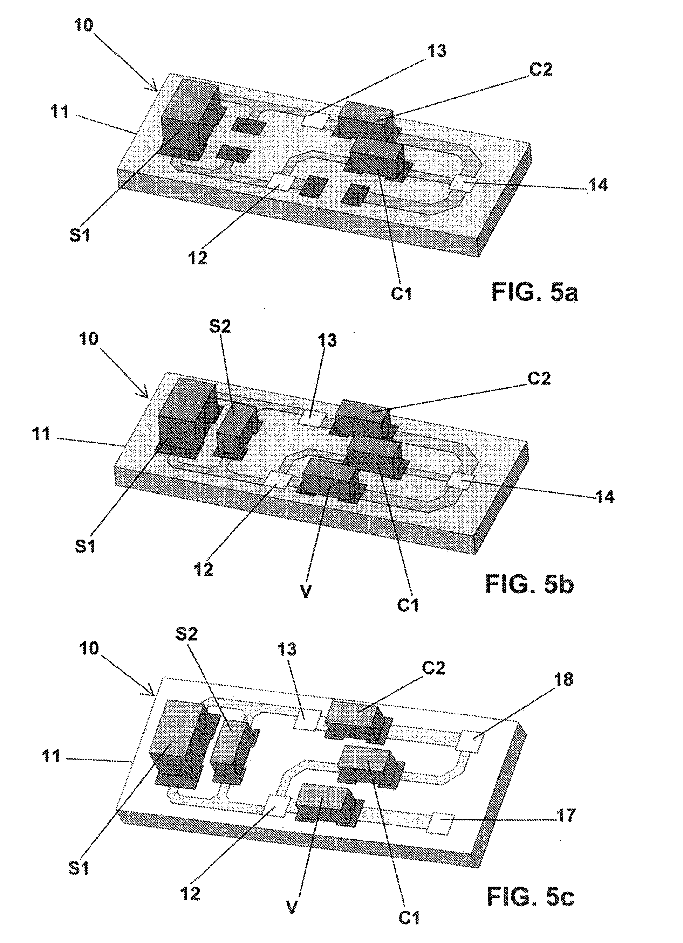

La **Figure 5a** montre un circuit de filtrage 10 ne comportant que les trois composants C1 ,C2,S1 nécessaires pour constituer un filtre en PI.

La **Figure 5b** montre un circuit de filtrage 10 comportant la seconde self S2 optionnelle, et la variante comprenant une varistance V.

Dans les implémentations du filtre montrées sur les **Figures 5a et 5b**, le substrat 11 ne comporte qu'une seule pastille de masse 14.

Au contraire, dans un autre mode de réalisation préféré de l'invention, le substrat 11 montré sur la **Figure 5c** comporte deux pastilles de masse 17, 18 créant une boucle masse contribuant à la fonction de transfert du filtre selon l'épaisseur des traces.

Le substrat 11 est de préférence une plaquette rectangulaire d'environ 12,5 mm sur 5 mm, et d'environ 0,8 mm d'épaisseur.

Afin d'obtenir de préférence un filtrage des fréquences comprises entre 100 KHz et 1 GHz, les condensateurs C1,C2 ont une capacité comprise entre 1 pF et 100 nF et les selfs S1,S2 une inductance comprise entre 0,01 µH et 100 µH.

La conception du circuit de filtrage 10 sous la forme d'un module séparé de l'élément de régulation 5 permet de conserver des éléments de régulation d'un type prédéterminé et d'adapter le porte-balais régulateur 1 aux contraintes d'immunité requises en lui associant un circuit de filtrage 10 d'un type variable, par le nombre de composants notamment, ayant les caractéristiques appropriées.

Il en résulte des économies d'échelle et, par conséquent, un avantage concurrentiel.

Le procédé de fabrication du porte-balais selon l'invention est compatible avec cette conception, et minimise les étapes d'assemblage.

Dans une première étape, on utilise des colles ayant des caractéristiques de polymérisation identiques pour fixer l'élément de régulation 5 et le circuit de filtrage 10, de façon à procéder à leur première polymérisation simultanément (de préférence par une montée en température graduelle à 200°C) dans une deuxième étape.

L'élément de régulation 5 étant habituellement microcâblé, le circuit de filtrage 10 n'est ni soudé, ni brasé, mais également microcâblé au cours d'une même troisième étape.

Le procédé de fabrication du porte-balais 1 selon l'invention se poursuit en appliquant à l'ensemble constitué par l'élément de régulation 5 et le circuit de filtrage 10 les étapes d'intégration d'un élément de commande et de régulation 5 habituelles :
- recouvrement par un gel polymérisable au cours d'une quatrième étape ;
- deuxième polymérisation du gel au cours d'une cinquième étape, de préférence à 160°C ;
- collage d'un capot au cours d'une sixième étape ;
- troisième polymérisation (de préférence à 160°C) achevant le collage du capot dans une septième étape.

Le procédé de connexion par microcâblage du circuit de filtrage 10, outre la simplification de la fabrication du porte-balais 1, permet de pallier les inconvénients connus de l'utilisation de composants surmoulés.

Comme il va de soi, l'invention ne se limite pas donc aux seuls modes d'exécution préférentiels décrits ci-dessus.

Elle embrasse au contraire toutes les variantes possibles de réalisation.

Notamment, le type de filtre du circuit de filtrage 10, le nombre et le type de composants précisés dans la description, leur agencement sur le substrat 11, ainsi que les valeurs de capacité et d'inductance spécifiées, ne sont aucunement limitatifs.

Des filtres en L, en T, ou plusieurs cellules de filtres en PI peuvent, selon l'invention, être implémentés dans le porte-balais 1 en fonction des gammes de fréquences à filtrer, dans la mesure où les caractéristiques de ce porte-balais 1 ne sortent pas du cadre fixé par les revendications ci-après.

Enfin, on tirera bénéfice de la mise en oeuvre du porte-balais 1 selon l'invention non seulement dans des alternateurs, comme décrit ci-dessus, mais également dans des alterno-démarreurs et d'autres équipements électriques analoques présentant des lignes de communications soumises à des perturbations radioélectriques.

## Revendications

1. Porte-balais régulateur (1) d'alternateur de véhicule automobile du type de ceux comportant :
- un support (2);
- un circuit électrique (5,6) comprenant un élément de régulation (5) connecté par microcâblage à un circuit de traces (6) ;
**caractérisé en ce que** ledit circuit électrique (5,6) comprend en outre un circuit de filtrage (10) séparé dudit élément de régulation (5) et connecté par microcâblage audit circuit de traces (6), ledit circuit de filtrage (10) comprenant un substrat isolant (11) et des composants montés en surface (C1,C2,S1,S2,V) et/ou un plan de masse (19) et/ou une ou plusieurs pastilles de masse (14, 17, 18) pour une connexion à une trace de masse (M) du circuit de traces (6), et ledit circuit de filtrage (10) étant un filtre en PI passe-bas monté en série par microcâblage entre une première trace (15) d'une entrée de commande dudit circuit électrique (5,6) et une seconde trace (16) d'une entrée de communication dudit élément de régulation (5).

2. Porte-balais régulateur (1) d'alternateur de véhicule automobile selon la revendication 1, **caractérisé en ce que** ledit substrat (11) comporte au moins une pastille conductrice de masse (14,16,17).

3. Porte-balais régulateur (1) d'alternateur de véhicule automobile selon la revendication 2 précédente, **caractérisé en ce que** ledit substrat (11) présente une boucle de masse contribuant à la fonction de transfert dudit filtre.

4. Porte-balais régulateur (1) d'alternateur de véhicule automobile selon l'une quelconque des revendications 1 à 3 précédentes, **caractérisé en ce que** ledit circuit de filtrage comporte des condensateurs (C1 ,C2) de capacité comprise entre 1 pF et 100 nF, des selfs (S1,S2) d'inductance comprise entre 0,01 µH et 100 µH et **en ce que** des fréquences de filtrage dudit filtre s'étendent de 100 KHz à 1 GHz.

5. Porte-balais régulateur (1) d'alternateur de véhicule automobile selon l'une quelconque des revendications 1 à 4, **caractérisé en ce que** ledit circuit de filtrage (10) comprend au moins une varistance (V).

6. Alternateur de véhicule automobile comprenant un porte-balais (1) selon l'une quelconque des revendications 1 à 5 précédentes.

## Patentansprüche

1. Bürstenhalter-Regulierer (1) eines Wechselstromgenerators eines Kraftfahrzeugs des Typs, der umfasst:
- einen Träger (2);
- eine elektrische Schaltung (5, 6), die ein Regulierungselement (5) umfasst, das durch Mikroverdrahtung mit einer Pfadschaltung (6) verbunden ist;
**dadurch gekennzeichnet, dass** die elektrische Schaltung (5, 6) außerdem eine Filterungsschaltung (10) umfasst, die von dem Regulierungselement (5) getrennt ist und durch Mikroverdrahtung mit der Pfadschaltung (6) verbunden ist, wobei die Filterungsschaltung (10) ein isolierendes Substrat (11) und oberflächenmontierte Komponenten (C1, C2, S1, S2, V) und/oder eine Masseebene (19) und/oder eine oder mehrere Massepastillen (14, 17, 18) für den Anschluss an einen Massepfad (M) der Pfadschaltung (6) umfasst, und
wobei die Filterungsschaltung (10) ein PI-Tiefpassfilter ist, das durch Mikroverdrahtung zwischen einem ersten Pfad (15) eines Steuereingangs der elektrischen Schaltung (5, 6) und einem zweiten Pfad (16) eines Kommunikationseingangs des Regulierungselements (5) in Reihe geschaltet ist.

2. Bürstenträger-Regulierer (1) eines Wechselstromgenerators eines Kraftfahrzeugs nach Anspruch 1, **dadurch gekennzeichnet, dass** das Substrat (11) wenigstens eine leitende Massepastille (14, 16, 17) umfasst.

3. Bürstenträger-Regulierer (1) eines Wechselstromgenerators eines Kraftfahrzeugs nach dem vorhergehenden Anspruch 2, **dadurch gekennzeichnet, dass** das Substrat (11) eine Masseschleife aufweist, die zu der Übertragungsfunktion des Filters beiträgt.

4. Bürstenträger-Regulierer (1) eines Wechselstromgenerators eines Kraftfahrzeugs nach einem der vorhergehenden Ansprüche 1 bis 3, **dadurch gekennzeichnet, dass** die Filterungsschaltung Kondensatoren (C1, C2) mit einer Kapazität im Bereich von 1 pF bis 100 nF und Induktionsspulen (S1, S2) mit einer Induktivität im Bereich von 0,01 µH bis 100 µH umfasst und dass die Filterungsfrequenzen des Filters von 100 kHz bis 1 GHz reichen.

5. Bürstenträger-Regulierer (1) eines Wechselstromgenerators eines Kraftfahrzeugs nach einem der Ansprüche 1 bis 4, **dadurch gekennzeichnet, dass** die Filterungsschaltung (10) wenigstens einen Varistor (V) umfasst.

6. Wechselstromgenerator eines Kraftfahrzeugs, der einen Bürstenträger (1) nach einem der vorhergehenden Ansprüche 1 bis 5 umfasst.

## Claims

1. Regulator brush-holder (1) of a motor vehicle alternator of the type of those comprising:
- a support (2);
- an electric circuit (5, 6) comprising a regulation element (5) connected by micro wiring to a track circuit (6) ;
**characterized in that** said electric circuit (5, 6) further comprises a filtering circuit (10) separate from said regulation element (5) and connected by micro wiring to said track circuit (6), said filtering circuit (10) comprising an insulating substrate (11) and surface-mounted components (C1, C2, S1, S2, V) and/or a ground plane (19) and/or one or more ground pads (14, 17, 18) for a connection to a ground track (M) of the track circuit (6), and said filtering circuit (10) being a low-pass PI filter mounted in series by micro wiring between a first track (15) of a command input of said electric circuit (5, 6) and a second track (16) of a communication input of said regulation element (5).

2. Regulator brush-holder (1) of a motor vehicle alternator according to Claim 1, **characterized in that** said substrate (11) comprises at least one ground conductive pad (14, 16, 17).

3. Regulator brush-holder (1) of a motor vehicle alternator according to the preceding Claim 2, **characterized in that** said substrate (11) has a ground loop contributing to the transfer function of said filter.

4. Regulator brush-holder (1) of a motor vehicle alternator according to any one of the preceding Claims 1 to 3, **characterized in that** said filtering circuit comprises capacitors (C1, C2) of capacitance between 1 pF and 100 nF, inductors (S1, S2) of inductance between 0.01 µH and 100 µH and **in that** filtering frequencies of said filter extend from 100 KHz to 1 GHz.

5. Regulator brush-holder (1) of a motor vehicle alternator according to any one of Claims 1 to 4, **characterized in that** said filtering circuit (10) comprises at least one varistor (V).

6. Motor vehicle alternator comprising a brush-holder (1) according to any one of the preceding Claims 1 to 5.
